# EUROPEAN PATENT APPLICATION

(11) **EP 1 770 060 A1**
(43) Date of publication of application: **04.04.2007**
(21) Application number: 05745866.3
(22) Date of filing: 31.05.2005
(51) Int. Cl.: C01B 13/02

(54) **NEGATIVELY CHARGED OXYGEN ATOM GENERATOR**

(30) Priority: 31.05.2004 JP 2004160374
(71) Applicant: Oxy Japan Company Limited, Tokyo 102-0083 (JP); DENKI KAGAKU KOGYO KABUSHIKI KAISHA, Tokyo 103-8338 (JP)
(72) Inventor: LI, Quanxin c/o Dpt. of Chemical Physics, Hefei, Anhui 230026 (CN); TORIMOTO, Yoshifumi, Chiyoda-ku Tokyo 102-0083 (JP); SADAKATA, Masayoshi, Suginami-ku Tokyo 166-0003 (JP)
(74) Representative: Vossius & Partner
(86) International application number: PCT/JP2005/009924
(87) International publication number: WO 2005/115913

(57) **Abstract**

The invention provides a negatively charged oxygen atom production system capable of generating a high concentration of negatively charged oxygen atoms at a lower temperature that used heretofore in the art. In the negatively charged oxygen atom production system (1), a fired oxide compact selected from the group of a fired cerium oxide compact, a fired cerium oxide aluminum oxide compact, and a fired compact of a composite oxide of cerium oxide and calcium oxide·aluminum oxide is located together with a heating means (4) for that fired oxide compact.

## Description

### ART FIELD

The present invention relates to a negatively charged oxygen atom production system. Negatively charged oxygen atoms, also called O⁻ ion radicals, are very useful in various applications such as oxidization reactions in gases, fabrication of silicon oxide films in semiconductor production processes, mold prevention of fruits such as strawberry, maintenance of freshness of sea food such as tuna, disinfection and sterilization of medical equipment, floors and air conditioners, etc.

### BACKGROUND ART

Among negatively charged oxygen atom production processes known so far in the art, there is a process of producing negatively charged oxygen atoms as by deposition of low energy electrons to oxygen atoms generated by discharge or the like. An energy problem with such a process is, however, that high vacuum is needed for effecting discharge.
The inventors have already come up with a negatively charged oxygen atom production process and system which enable negatively charged oxygen atoms to be efficiently produced using 12CaO · 7A₁₂O₃ crystals (hereinafter referred to as C12A7 for short), yet with no need of high vacuum or discharge energy (for instance, see Patent Publication 1) .

The use of C12A7 enables negatively charged oxygen atoms to be produced with extremely high efficiency by application of an electric field. However, for the application of C12A7 to the industry, there is left much to be desired.
That is, when C12A7 containing a high concentration of negatively charged oxygen atoms is applied as oxidation promoters, sterilizing materials or the like, it is necessary to retain C12A7 at a temperature as high as 700 °C or higher.
At such a high temperature, there are some limits to the system material used, and there are large thermal impacts on the fired C12A7, a member for holding it or the like as well. Therefore, there is still a growing demand for a negatively charged oxygen atom production system capable of running at a lower temperature.
Patent Publication 1: International Application No. 03/050037 pamphlet

### DISCLOSURE OF THE INVENTION

### PROBLEM TO BE SOLVED BY THE INVENTION

An object of the invention is to provide a negatively charged oxygen atom production system that enables negatively charged oxygen atoms to be produced at a lower temperature than used in the prior art yet with high efficiency. A more specific object of the invention is to provide a negatively charged oxygen atom production system that makes it possible to produce a high concentration of negatively charged oxygen atoms even at a temperature much lower than 700 °C that is the operating temperature for the inventors' prior negatively charged oxygen atom production system using the 12CaO·7Al₂O₃ composite oxide.
Another object of the invention is to provide a negatively charged oxygen atom production system by which a fired oxide compact is efficiently heated at lower power consumption for efficient production of a high concentration of negatively charged oxygen atoms.

### MEANS FOR SOLVING THE PROBLEM

The invention provides a negatively charged oxygen atom production system that includes a fired oxide compact selected from the group of a fired cerium oxide compact, a fired cerium · aluminum oxide compact, and a fired compact of a composite oxide of cerium oxide and calcium · aluminum oxide, and a heating means for said fired oxide compact.
Preferably in the negatively charged oxygen atom production system as recited above, the fired cerium aluminum oxide compact has a composition of cerium (IV) oxide and aluminum oxide at a molar ratio of 1: 5
Preferably in the negatively charged oxygen atom production system as recited above, the fired compact comprising the composite oxide of cerium oxide and calcium· aluminum oxide has a composition of cerium (IV) oxide, aluminum oxide and calcium oxide at a molar ratio of 2.1:4.9:12.

Preferably in the negatively charged oxygen atom production system as recited above, the fired oxide compact is located on a porous ceramic substrate or an oxygen ion conductive solid electrolyte substrate.
Preferably in the negative charged oxygen atom production system as recited above, the heating means is located on or in the porous ceramic substrate or oxygen ion conductive solid electrolyte substrate.
Preferably in the negatively charged oxygen atom production system as recited above, a cathode is located on the surface of the porous ceramic substrate or oxygen ion conductive solid electrolyte substrate that faces away from the fired compact, an anode is located on the side of the substrate that faces way from the cathode, an oxygen chamber is positioned on a cathode side, and a negatively charged oxygen atom generation chamber is located on the side with the anode positioned thereon with a voltage applied between the cathode and the anode.
Preferably in the negatively charged oxygen atom production system as recited above, the anode is spaced away from the fired oxide compact.

### ADVANTAGES OF THE INVENTION

The invention provides a negatively charged oxygen atom production system capable of producing negatively charged oxygen atoms by heating the fired compact at a temperature of 400 to 600 °C much lower than used so far in the art. This lower temperature enables the structure of the negatively charged oxygen atom production system to be simplified, and ensures that there are much less influences on the system components by thermal impacts or thermal hysteresis, making sure much wider applications of negatively charged oxygen atoms.

### BRIEF DESCRIPTION OF THE DRAWINGS

Fig. 1 is illustrative of one embodiment of the negatively charged oxygen atom production system according to the invention.
Fig. 2 is illustrative of one generation site in the negatively charged oxygen atom production system of the invention, wherein the heater is integral with the fired compact containing cerium (IV) oxide.
Fig. 3 is illustrative of another generation site in the negatively charged oxygen atom production system of the invention, wherein the heater is integral with the fired compact containing cerium (IV) oxide.
Fig. 4 is illustrative of yet another generation site in the negatively charged oxygen atom production system of the invention, wherein the heater is integral with the fired compact containing cerium (IV) oxide.
Fig. 5 is illustrative of a detector for negatively charge oxygen atoms.

### EXPLANAITON OF THE REFERENCE NUMERALS

1: negatively charged oxygen atom production system, 2: negatively charged oxygen atom generation member, 3: cathode, 4: heating means, 5: partitions, 6: oxygen chamber, 7: negatively charged oxygen atom generation chamber, 8: oxygen inlet port, 9: negatively charged oxygen atom generation site, 10: anode, E1: generation voltage, 11: irradiation site, 12: accelerating electrode, E2: accelerating power source, 13:
sample, 14: rare gas inlet port, 15: rare gas discharge port, 16: rare gas flow, 17: cooling means, 18: coolant, 31: generation site, 32: substrate, 33: heater, 34: fired material, 35: porous electrode, 36: leading electrode, 41: detector, 42: vacuum vessel, 43: sample holder, 44: sample, 45: electric heater, 46: temperature measuring means, 47: temperature control means, 48: pressure gauge, 49: vacuum evacuation means, 50: high-voltage pulse power source, 51: accelerating electrode, 52: detector, and 53: measuring means.

### BEST MODE FOR CARRYING OUT THE INVENTION

The inventors have now found that a fired compact of cerium (IV) oxide, specifically, a fired compact of cerium (IV) oxide alone, a fired compact of cerium (IV) oxide and aluminum oxide or a fired compact of a composite oxide of calcium oxide/calcium · aluminum oxide is working at a lower temperature than used in a negatively charged oxygen atom production system using a fired compact of the composite oxide of calcium · aluminum oxide.

Why the fired compact of cerium (IV) oxide, the fired compact of cerium (IV) oxide and aluminum oxide, or the fired compact of the composite oxide of cerium (IV) oxide/calcium aluminum oxide, i.e., 12CaO · 7Al₂O₃ could generate negatively charged oxygen atoms at a lower temperature than used in the prior art has yet to be clarified, but such a phenomenon is quite an unheard-of one.

The fired compact of cerium (IV) oxide, the fired compact of cerium (IV) oxide/aluminum oxide, or the fired compact of the composite oxide of cerium (IV) oxide/calcium · aluminum oxide may be prepared by firing the starting material at a partial oxygen pressure having a given or greater magnitude and under a limited partial water vapor pressure at 1,200 to 1, 500 °C for 4 to 8 hours, specifically, at a partial oxygen pressure of at least 2 kPa, preferably at least 10 kPa. The partial water vapor pressure applied is preferably a dry oxygen atmosphere having a pressure of up to 10 Pa, preferably up to 10⁻³ Pa.

For the firing atmosphere, air, oxygen or a gas mixture of oxygen with nitrogen, argon, helium or the like could be used. In order to prepare a fired oxide compact with high purities, however, it is preferable to use high-purity oxygen or a gas mixture of oxygen with an inert gas.

The fired cerium oxide compact may be prepared by compacting cerium (IV) oxide having an average particle diameter of about 1 m into a given shape, and then firing that compact.
The fired compact of cerium (IV) oxide/aluminum oxide may be prepared by firing a composition comprising cerium (IV) oxide and alumina at a molar mixing ratio of 1: 5 as is the case with the firing compact of cerium (IV) oxide alone.

The fired compact of cerium (IV) oxide/calcium aluminum oxide may be prepared by firing a composition comprising CeO₂:Al₂O₃:CaO = 2.1:4.9:12 (by mole). When the oxygen atmosphere applied contains much moisture, OH ions resulting from that moisture upon firing are taken up in the fired oxide compact, so that oxygen cannot efficiently be taken up in the crystal structure. In other words, firing should preferably be carried out in an atmosphere having a reduced partial water vapor pressure.

The fired compact containing cerium (IV) oxide according to the invention may be a fired compact comprising cerium (IV) oxide, which may or may not be formed on an oxygen ion conductive solid electrolyte such as zirconia or yttria-stabilized zirconia. Alternatively, the fired oxide compact may be formed on a substrate by means of plasma spraying or the like.
The starting material for firing may be not only an oxide but also a compound containing carbon, hydrogen and oxygen, for instance, a substance that is easily converted by firing into an oxide alone, like a carbonate or hydroxide.

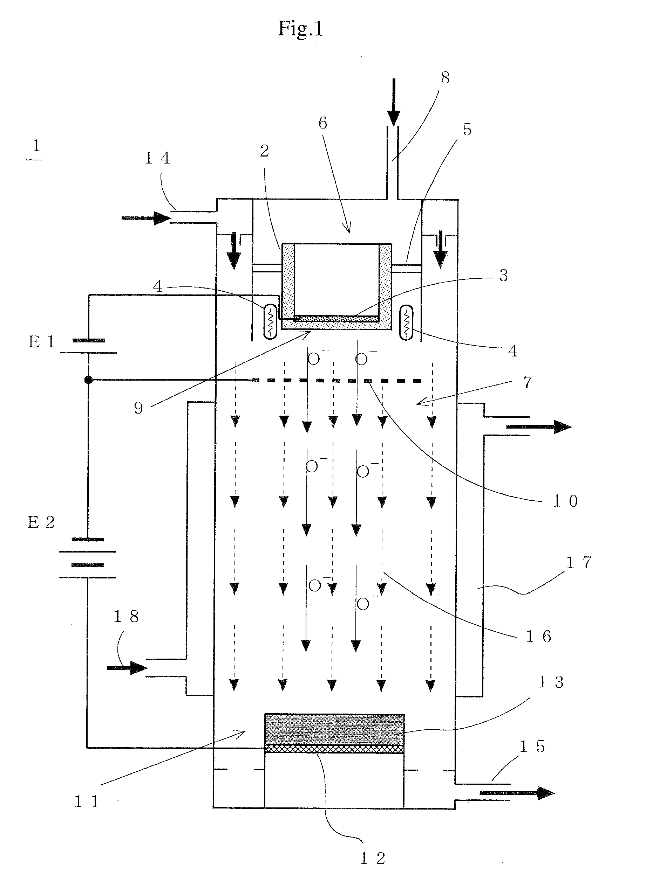

Fig. 1 is illustrative of one embodiment of the negatively charged oxygen atom production system according to the invention, shown generally by 1.
The production system 1 comprises a negatively charged oxygen atom generation member 2 built up of a fired oxide compact containing cerium (IV) oxide. There is a cathode 3 attached to the internal bottom surface of the negatively charged oxygen atom generation member 2 that is here in a cylindrical form, and a heating means 4 adapted to heat the fired oxide compact, such as an electric heater or a halogen lamp, is provided. A partition 5 is provided to separate an oxygen chamber 6 from a negatively charged oxygen atom generation chamber 7, and oxygen of normal pressure is supplied into the oxygen chamber 6 via an oxygen inlet port 8.

On the other hand, the negatively charged oxygen atom generation chamber 7 is provided with an anode 10 acting as a leading electrode near a negatively charged oxygen atom generation site 9, to which a generation voltage E1 is applied. An irradiation site 11 to be irradiated with negatively charged oxygen atoms is provided with an accelerating electrode 12 adapted to accelerate the ensuing negatively charged oxygen atoms, to which an accelerating voltage is applied from an accelerating power source E2. A sample 13 is placed at the front of the accelerating electrode.
The generation chamber 7 is provided with a rare gas inlet port 14 and a rare gas discharge port 15, and there is a rare gas flow 16 created in the generation chamber 7, flowing from the negatively charged oxygen atom generation site 9 toward the negatively charged oxygen atom irradiation site 11.

A wall surface of the generation chamber 7 is provided with a cooling means 17 adapted to circulate a coolant 18 thereby keeping the generation chamber 7 against a temperature rise. In turn, this prevents conduction to the irradiation site of radiation heat applied by the heating means 4, and heat conducted by the rare gas flow from the negatively charged oxygen atom generation site.

While the negatively charged oxygen atom generation member according to the invention has been described as a self-supporting member built up of a cylindrical compact containing fired cerium (IV) oxide, it is understood that it may be formed by providing a coating layer containing fired cerium (IV) oxide on a porous, heat-resistant substrate, or forming the starting oxide on a support by means of film-formation techniques that cause no denaturation of its composition, for instance, plasma spraying or sputtering.
For the cathode located within the oxygen chamber, it is preferable to use electrically conductive materials such as metals or electrically conductive oxides that do not suffer from denaturation at the time when heated in an oxygen atmosphere. Preference is given to noble metals such as platinum or gold, nickel, and stainless steel, although platinum, and gold is particularly preferred.
The cathode, for instance, may be formed by coating techniques or vacuum film-formation techniques.

The fired compact may be heated with a heater or other heating means located in contact with it, or by use of a halogen lamp located at a given position.
For the anode acting as a leading electrode, use may be made of noble metals such as gold or platinum, metals such as nickel, and alloys such as stainless steel (for instance, SUS304 and SUS430), all stable to oxygen. Among others, the most preference is given to platinum that may be used in a rod, linear or network form or while coated on a substrate.
The distance between the generation site of the fired compact and the anode is preferably up to 10 mm so as to generate negatively charged oxygen atoms at a low voltage. It is more preferable to form a space of the µm order by an insulating member thereby holding the anode parallel to the generation site, because the smaller the space, the higher the intensity of an electric field defined between the anode and the cathode grows, making operation at a lower applied voltage possible.

The potential difference between the cathode and the anode is between 1 V/cm and 2, 000 V/cm, preferably between 10 V/cm and 1, 000 V/cm, and more preferably between 50 V/cm and 500 V/cm. A potential difference lower than 1 V/cm may cause the generation efficiency to grow low, whereas a potential difference higher than 2,000 V/cm may possibly do damage to the fired compact or the electrodes.
By heating the fired compact according to the invention to 400 to 600 °C, it is possible provide efficient production of negatively charged oxygen atoms.

In the negatively charged oxygen atom production system according to the invention, a flow of a rare gas selected from helium, xenon, argon or the like, or nitrogen or the like is used to make sure efficient irradiation of the irradiation site with negatively charged oxygen atoms generated in the generation chamber. The gas flow of the rare gas, nitrogen or the like will hereinafter be called the inert gas flow.
In the generation chamber, the inert gas flow acts conducting heat from the heated generation site for negatively charged oxygen atoms. Thus, heat is conducted to the irradiation site not only by negatively charged oxygen atoms but also by the inert gas. In this regards, control of the inert gas flow rate must be done in consideration of a rise in the temperature of the irradiation site; for instance, when the inert gas denatures upon heating, its flow rate is preferably kept low.

It is preferable to use a flow of an inert gas having a low molecular weight, because the mean free path of negatively charged oxygen atoms grows so large that the quantity of disappearance of negatively charged oxygen atoms can become low. However, other gases could also be used although depending on purposes.
Where to locate an inlet port through which the inert gas flows in the generation chamber is preferably determined in such a way as to provide a stable inert gas flow from the negatively charged oxygen atom generation site to the irradiation site.

In the invention, a voltage applied between the anode acting as a leading electrode and an accelerating electrode located at the irradiation site is controlled so that the speed of negatively charged oxygen atoms with which a sample at the irradiation site is irradiated can be controlled.
In the negatively charged oxygen atom production system according to the invention, not only is the voltage applied to the anode controllable, but the inert gas formed in the generation chamber and an accelerating voltage applied between the anode and the irradiation site are also controllable. It is thus possible to give negatively charged oxygen atoms to the sample at the irradiation site at an energy level depending on the purpose.
For instance, when materials likely to denature under reduced pressure are sterilized under normal pressure, the energy level of negatively charged oxygen atoms to be irradiated can be controlled depending on the kind of the fungi. Accordingly, even when it comes to fungi having resistance increased by spores, the accelerating voltage can be increased to kill them by irradiation with negatively charged oxygen atoms having an increased effect.

In the embodiment here, the heating means is described as being spaced away from the fired compact containing cerium (IV) oxide; however, the fired compact containing cerium (IV) oxide could be integral with the heater.

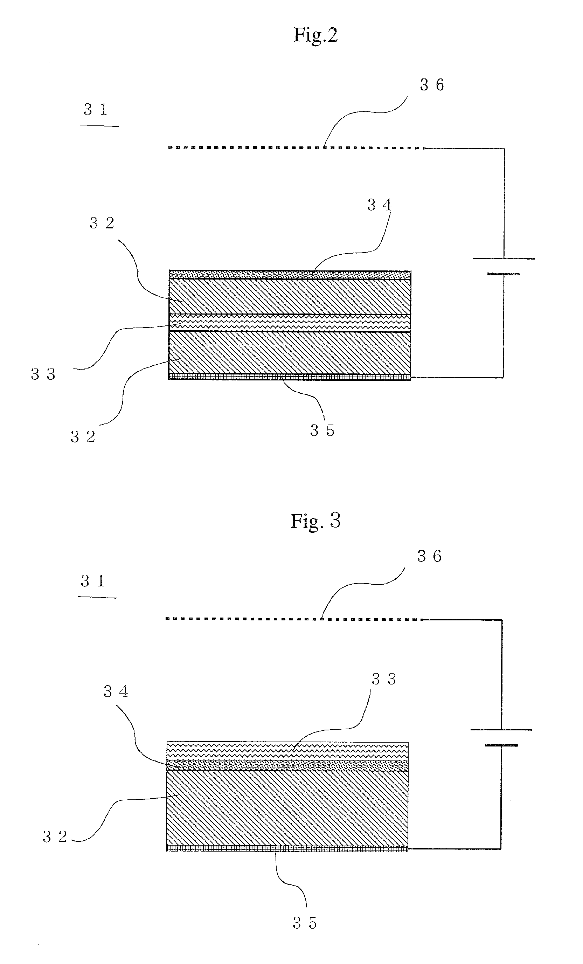

Fig. 2 is illustrative in section of the generation site of the negatively charged oxygen atom production system according to the invention, wherein the heater is integral with the fired compact containing cerium (IV) oxide.
At a generation site 31, a heater 33 is located in a substrate 32 built up of a solid electrolyte such as zirconia or a yttria-stabilized zirconia, and a fired compact 34 containing cerium (IV) oxide is provided on its surface.

At the back surface of the substrate 32 that faces away from the fired compact 34, there is a porous electrode 35 located, which acts as a cathode. There is a voltage applied to the porous electrode 35 between it and a leading electrode 36 spaced away from the fired compact 34.
The fired compact 34 is in a 5 to 10 m thick thin film making sure a very small temperature difference between the surface of the substrate and the film surface, so that the temperature gradient in the fired compact 34 is small, and even heating from the back surface would do little damage to the efficiency of a release of negatively charged oxygen atoms from the film surface.

The arrangement with the heater 33 built in the substrate 32 is better in the efficiency of heating the fired compact 34 and lower in power consumption than a prior structure wherein heating takes place from the back surface of the substrate, and dispenses with any external heater, so that it can be downsized.

For the reason that the substrate is interposed between the electrode 35 and the heater 33, the temperature of the back surface having the electrode 35 becomes low, so that there can be a lot more oxygen captured on the back surface side than could be achieved with an arrangement having a heater on its back surface side.

Fig. 3 is illustrative in section of another generation site of the negatively charged oxygen atom production system according to the invention, wherein the heater is integral with the fired compact containing cerium (IV) oxide.
A generation site 31 shown in Fig. 3 is different from that shown in Fig. 2 in that a heater 33 is located on the outside of a thin film form of fired compact 34 containing cerium (IV) oxide. Note here that the heater 33 has an opening of network or other structure so as to make sure a smooth release of negatively charged oxygen atoms.

The fired compact 34 is formed on the surface of a substrate 32, and a porous electrode 35 is located on the back surface of the substrate 32. As is the case with Fig. 2, the temperature of the back surface side becomes low for the reason that the substrate 32 is interposed between the heater 33 and the electrode 35, so that there can be a lot more oxygen captured on the back surface side than could be achieved an arrangement with a heater located on the back surface side.

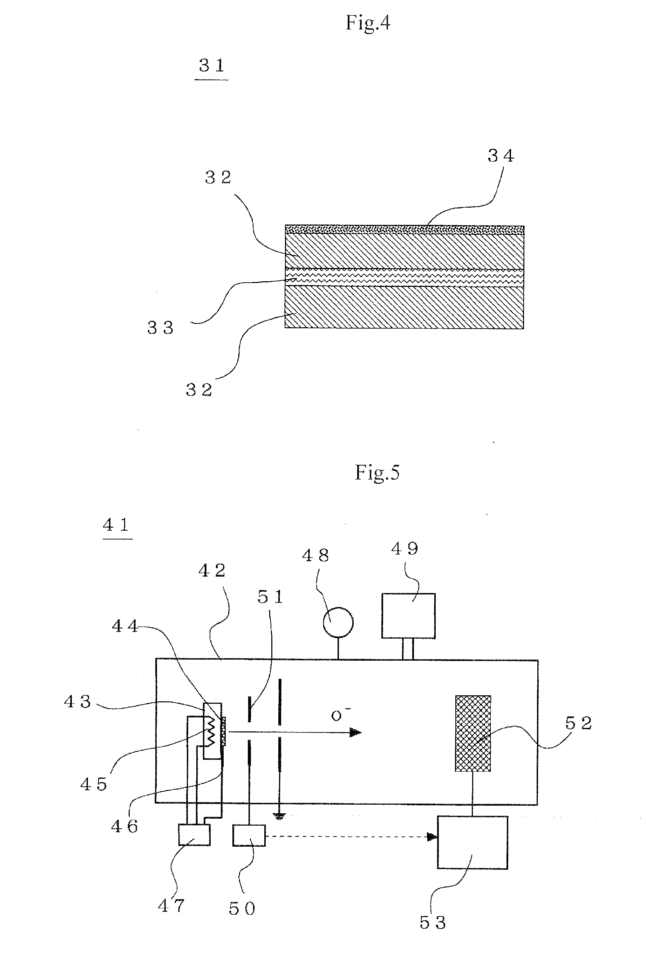

Fig. 4 is illustrative in section of yet another generation site of the negatively charged oxygen atom production system according to the invention, wherein the heater is integral with the fired compact containing cerium (IV) oxide.
The embodiments of Figs. 2 and 3 have each a leading electrode; the generation site shown in Fig. 4 is different from those shown in Figs. 2 and 3 in that there is no leading electrode, and negatively charged oxygen atoms are generated from the surface in the absence of an electric field.

At a generation site 31, a heater 33 is located in a substrate 32, and a fired compact 34 containing cerium (IV) oxide is provided on its surface.
Near that fired compact 34, the arrangement operates killing or deodorizing organic matter or the like contained in the atmosphere; it is provided in tiles or air conditioners to disinfect or deodorize indoor air. To increase the area of contact with the air, that arrangement may be configured into a honeycomb structure.

### EXAMPLE

### Example 1

Cerium (IV) oxide (guaranteed reagent) having an average particle diameter of 1 m was compacted into a diameter of 10 mm and a thickness of 1 mm. Then, the compact was fired in dry air at 1,350 °C for 6 hours to obtain a fired cerium (IV) oxide compact.
The obtained fired cerium (IV) oxide compact was attached to a detector harnessing the measuring principles of a time-of-flight mass spectrometer to detect negatively charged oxygen atoms.

Fig. 5 is illustrative of the detector for negatively charged oxygen atoms.
A detector 41 is constructed of a vacuum vessel 42, in which there is a sample holder table 43, to which a fired compact consisting of cerium oxide is attached as a sample 44.
Within the sample holder table 43, there is an electric heater 45 located, and the sample holder table is provided with a sample temperature measurement means 46 in contact with a sample 44, so that the sample is set by a temperature control means 47 to a given temperature.

The vacuum vessel 42 is joined with a pressure gauge 48 and a vacuum evacuation means 49, so that after a desired pressure is created by the vacuum evacuation means in the vacuum vessel, a high-voltage pulse current is applied from a high-voltage pulse power source 50 to an accelerating electrode 51.

Generated negatively charged oxygen atoms are detected as a current on the detector 52 and, at the same time, the mass number is detected by a measuring means 53 on the basis of the flight time up to the detector depending on the mass number.
After the fired cerium oxide compact was heated to 600 °C, an electric field of 100 V/cm was applied to it. As a result, there was a 1 µ A current detected. The generated ion current was found to have a mass number of 16 or it was found to be an oxygen atom.

### Example 2

Cerium (IV) oxide (guaranteed reagent) and aluminum oxide (guaranteed reagent), each having an average particle diameter of 1 u m, were mixed together at a molar ratio of 1: 5, and the mixture was compacted into a diameter of 10 mm and a thickness of 1 mm. Then, the compact was fired in a dry atmosphere at 1,350 °C for 6 hours to prepare a fired compact of cerium (IV) oxide and aluminum oxide
An electric field of 100 V/cm was applied to the obtained fired compact of cerium (IV) oxide and aluminum oxide at 600 °C on the same negatively charged oxygen atom detector as in Example 1. As a result, there was a 0.5 A current detected. The generated ion current was found to have a mass number of 16 or it was found to be an oxygen atom.

### Example 3

Cerium (IV) oxide (guaranteed reagent), aluminum oxide (guaranteed reagent) and calcium oxide (guaranteed reagent), each having an average particle diameter of 1 µ m, were mixed together at a molar ratio of 2.1:4.9:12, and the mixture was compacted into a diameter of 10 mm and a thickness of 1 mm. In a dry atmosphere, the compact was heated to 1, 350 °C in 2 hours, and then fired at 1,350 °C for 6 hours. After firing, the compact was slowly cooled down to room temperature to prepare a fired compact of cerium (IV) oxide-calcium aluminum oxide.

Observation of the obtained fired compact under an X-ray diffractometer (XRD-7000 made by Shimadzu Co., Ltd.) indicated a crystal structure of calcium aluminum composite oxide (12CaO · 7Al₂O₃) and a fluorite crystal structure of cerium (IV) oxide.
By use of an electron spin resonance spectroscope, it was found that there were 10²⁰ cm⁻³ of O and 2×10²⁰ cm of O₂⁻ included in the obtained fired compact.

With an electrode and a heater attached to the fired compact of cerium (IV) oxide-calcium aluminum oxide, an electric field of 100 V/cm was applied to it at 600 °C on the detector. As a result, there was a 1.2 *µ* A current detected. The generated ion current was found to have a mass number of 16 or it was found to be an oxygen atom.

### Comparative Example 1

Powders of 12CaO · 7Al₂O₃ were compacted into a diameter of 10 mm and a thickness of 1 mm, and the compact was fired at 1, 350 °C for 6 hours to prepare a fired 12CaO · 7Al₂O₃ compact.
With an electrode and heater attached to the obtained fired 12CaO · 7Al₂O₃ compact, it was heated to 600 °C on the negatively charged oxygen atom detector as in Example 1, and an electric field of 100 V/cm was applied to it. As a result, there was a 0.05 µ A current detected. The generated ion current was found to have a mass number of 16 or it was found to be an oxygen atom.

### POSSIBLE APPLICATIONS TO THE INDUSTRY

The negatively charged oxygen atom production system of the invention using a fired compact containing cerium (IV) oxide is better in the quantity of negatively charged oxygen atoms generated than, and can operate at a heating temperature that is 200 to 400 °C lower than, C12A7. Therefore, the structure of the system can be simplified, and negatively charged oxygen atoms could find applications in an ever wider range of fields.

## Claims

1. A negatively charged oxygen atom production system, **characterized by** including a fired oxide compact selected from the group of a fired cerium oxide compact, a fired cerium · aluminum oxide compact, and a fired compact of a composite oxide of cerium oxide and calcium · aluminum oxide, and a heating means for said fired oxide compact.

2. The negatively charged oxygen atom production system as recited in claim 1, **characterized in that** the fired cerium aluminum oxide compact has a composition of cerium (IV) oxide and aluminum oxide at a molar ratio of 1:5.

3. The negatively charged oxygen atom production system as recited in claim 1, **characterized in that** the fired compact comprising the composite oxide of cerium oxide and calcium aluminum oxide has a composition of cerium (IV) oxide, aluminum oxide and calcium oxide at a molar ratio of 2.1:4.9:12.

4. The negatively charged oxygen atom production system as recited in any one of claims 1 to 3, **characterized in that** the fired oxide compact is located on a porous ceramic substrate or an oxygen ion conductive solid electrolyte substrate.

5. The negative charged oxygen atom production system as recited in claim 4, **characterized in that** the heating means is located on or in the porous ceramic substrate or oxygen ion conductive solid electrolyte substrate.

6. The negatively charged oxygen atom production system as recited in claim 5, **characterized in that** a cathode is located on a surface of the porous ceramic substrate or oxygen ion conductive solid electrolyte substrate that faces away from the fired oxide compact, an anode is located on a side of the substrate that faces away from the cathode, an oxygen chamber is positioned on a cathode side, and a negatively charged oxygen atom generation chamber is located on a side with the anode thereon with a voltage applied between the cathode and the anode.

7. The negatively charged oxygen atom production system as recited in claim 6, **characterized in that** the anode is spaced away from the fired oxide compact.
